# EUROPÄISCHE PATENTSCHRIFT

(11) **EP 2 858 816 B1**
(45) Veröffentlichungstag und Bekanntmachung des Hinweises auf die Patenterteilung: **02.01.2019**
(21) Anmeldenummer: 13729009.4
(22) Anmeldetag: 07.06.2013
(51) Int. Cl.: B32B 5/00, B65D 75/58, B65D 33/18

(54) **VERPACKUNGSFOLIENLAMINAT MIT INTEGRIERTEM KLEBEBAND**
PACKAGING FILM LAMINATE WITH INTEGRATED ADHESIVE STRIP
STRATIFIÉ DE FILMS D'EMBALLAGE INTÉGRANT UN RUBAN ADHÉSIF

(30) Priorität: 08.06.2012 DE 102012209658
(43) Veröffentlichungstag der Anmeldung: 15.04.2015
(73) Patentinhaber: Huhtamaki Flexible Packaging Germany GmbH & Co. KG, 87671 Ronsberg/Allgäu (DE)
(72) Erfinder: SURDZIEL, Agata, 87671 Ronsberg (DE); DAELMANS, Eddy, 87671 Ronsberg (DE); KLAUS, Thomas, 87671 Ronsberg (DE); MARZ, Manfred, 87671 Ronsberg (DE)
(74) Vertreter: Ruttensperger Lachnit Trossin Gomoll
(86) Internationale Anmeldenummer: PCT/EP2013/061827
(87) Internationale Veröffentlichungsnummer: WO 2013/182689

(56) Entgegenhaltungen:
- US-A- 5 035 518

## Beschreibung

Die vorliegende Erfindung betrifft ein Verpackungsfolienlaminat zur Bildung von Folienverpackungen, umfassend eine erste Folienanordnung zur Bildung einer Außenseite einer aus dem Verpackungsfolienlaminat gebildeten Folienverpackung, eine zweite Folienanordnung zur Bildung einer Innenseite einer aus dem Verpackungsfolienlaminat gebildeten Folienverpackung und eine zwischen diesen gelegene und zu deren Verbindung miteinander beitragende Adhäsionslage, wobei die erste Folienanordnung einen durch Materialschwächung definierten Löseabschnitt aufweist, welcher wenigstens abschnittsweise an einen Dauerabschnitt derselben Folienanordnung angrenzt und im Gegensatz zum Dauerabschnitt gegen die Haftkraft der Adhäsionslage aus der ursprünglich gemeinsamen Erstreckungsfläche des Verpackungsfolienlaminats und damit aus dem Verpackungsfolienlaminat herauslösbar ist.

Ein derartiges Verpackungsfolienlaminat ist aus der DE 10 2009 047 369 A1 bekannt, allerdings nur in einer zu einer Beutelverpackung weiterverarbeiteten Gestalt.

Die aus der DE 10 2009 047 369 A1 bekannte Beutelverpackung weist an einer ihrer Außenseiten eine Klebelasche auf, die aus der Ebene der außen liegenden Folienanordnung des zur Herstellung der bekannten Beutelverpackung verwendeten Verpackungsfolienlaminats herauslösbar und gegen eine beliebige andere Stelle der Beutelverpackung erneut verklebbar ist. Mit der bekannten Beutelverpackung ist es vorteilhaft möglich, eine einmal geöffnete Beutelverpackung mit Hilfe der Klebelasche wieder zu verschließen.

Die DE 10 2009 047 369 A1 offenbart in der Beutelverpackung lediglich die Verwendung eines einzigen Klebstoffs, welcher nur eine begrenzte Haftkraft zwischen der ersten und der zweiten Folienanordnung, die durch die Adhäsionslage getrennt bzw. miteinander verbunden sind, vermittelt, da die Klebelasche der ersten Folienanordnung von der zweiten Folienanordnung zerstörungsfrei ablösbar sein muss.

Aus der US 5 035 518 A sind Verschlussstreifen bekannt, die auf separate Behälter aufgeklebt werden und nach einem ersten Öffnen des Behälters ein erneutes bzw. wiederholtes Verschließen ermöglichen. Die US 5 035 518 A offenbart jedoch kein Verpackungsfolienlaminat, das zur Bildung von Folienverpackungen geeignet ist.

Ausgehend von dem genannten Stand der Technik ist es Aufgabe der vorliegenden Erfindung, das bekannte Verpackungsfolienlaminat und etwaig daraus gebildete Folienverpackungen weiter zu verbessern.

Diese Aufgabe wird erfindungsgemäß gelöst durch ein Verpackungsfolienlaminat mit allen Merkmalen des Anspruchs 1. Die Adhäsionslage eines erfindungsgemäßen Verpackungsfolienlaminats weist wenigstens zwei hinsichtlich ihrer bei Raumtemperatur von 20°C zwischen der ersten und der zweiten Folienanordnung wirkenden Haftkräfte verschiedene Klebstoffe auf, von welchen ein erster Klebstoff verglichen mit einem zweiten Klebstoff pro Flächeneinheit eine höhere Haftkraft bereitstellt und im Bereich des Dauerabschnitts aufgetragen ist, und von welchen ein zweiter Klebstoff verglichen mit dem ersten Klebstoff pro Flächeneinheit eine niedrigere Haftkraft bereitstellt und im Bereich des Löseabschnitts vorgesehen ist.

Durch die Verwendung der genannten Klebstoffe in einer einzigen Adhäsionslage können die Haftkräfte in den unterschiedlichen Abschnitten des Verpackungsfolienlaminats so eingestellt werden, wie sie bei bestimmungsgemäßem Gebrauch des Verpackungsfolienlaminats benötigt werden oder wenigstens vorteilhaft sind. So kann dafür Sorge getragen werden, dass die erste und die zweite Folienanordnung im Dauerabschnitt mit hoher Haftkraft miteinander verbunden sind und bestimmungsgemäß nicht oder nur mit sehr geringer Wahrscheinlichkeit zerstörungsfrei voneinander gelöst werden können. Dagegen kann in dem bestimmungsgemäß zum Lösen aus dem Verpackungsfolienlaminat vorgesehenen Löseabschnitt ein Klebstoff vorgesehen sein, welcher gerade dieses Lösen erleichtert und zugleich ein erneutes Verkleben des Löseabschnitts mit einer anderen Oberfläche, insbesondere mit einer Außenseite der ersten Folienanordnung, ermöglicht.

Somit kann in dem Verpackungsfolienlaminat bereits bei dessen Herstellung ein Klebestreifen oder Klebefleck für ein Wiederverschließen oder für eine Ortsfestlegung einer aus dem erfindungsgemäßen Verpackungsfolienlaminat gefertigten Verpackung bereitgestellt werden.

Alle in der vorliegenden Anmeldung gemachten Angaben zu Eigenschaften von Klebstoffen der Adhäsionslage beziehen sich auf einen Zustand der Klebstoffe bei 20°C (Raumtemperatur). Sofern weitere Atmosphärenbedingungen für die Beurteilung der Klebstoffeigenschaften eine Rolle spielen, soll hierfür eine Atmosphäre von 1 bar Luftdruck und einer relativen Feuchtigkeit von 40 bis 60 % herangezogen werden.

Dabei soll nicht ausgeschlossen sein, dass die genannten Hafteigenschaften der hier diskutierten Klebstoffe auch bei anderen Temperaturen vorliegen können. Im Regelfall wird dies sogar gewünscht sein. Da die meisten mit dem hier diskutierten Verpackungsfolienlaminat verpackten Güter jedoch bei Raumtemperatur beim Kunden oder im Laden vorliegen, ist es wichtig, dass die Klebstoffe vor allem bei der genannten Raumtemperatur von 20°C die beschriebenen Eigenschaften aufweisen.

Grundsätzlich soll nicht ausgeschlossen sein, dass im Bereich des Löseabschnitts des Verpackungsfolienlaminats mehrere Klebstoffe vorgesehen sind, von denen einer der zweite Klebstoff ist. Aus Gründen eines möglichst defnierten Löse- und Klebeverhaltens des Löseabschnitts ist es jedoch bevorzugt, wenn im Bereich des Löseabschnitts nur der zweite Klebstoff und darüber hinaus kein weiterer vorgesehen ist.

Ebenso soll grundsätzlich nicht ausgeschlossen sein, dass in einzelnen Bereichen des Dauerabschnitts auch zweiter Klebstoff vorgesehen sein kann, solange die vom ersten Klebstoff erwarteten Hafteigenschaften überwiegen. Auch hier ist es jedoch aus Gründen der Bereitstellung möglichst eindeutiger und möglichst einheitlicher Hafteigenschaften gemäß einer vorteilhaften Weiterbildung der vorliegenden Erfindung bevorzugt, wenn im Bereich des Dauerabschnitts kein zweiter Klebstoff vorgesehen ist. Zwar kann auch im Bereich des Dauerabschnitts eine Mehrzahl von Klebstoffen vorgesehen sein, von denen der erste Klebstoff nur ein Klebstoff ist, jedoch ist aus den oben im Zusammenhang mit dem Löseabschnitt genannten Gründen auch für den Dauerabschnitt bevorzugt, wenn in dessen Bereich nur der erste Klebstoff vorgesehen ist.

Um gewährleisten zu können, dass der Löseabschnitt nach einem Ablösen von der zweiten Folienanordnung wieder mit einer Oberfläche verklebt werden kann, ist es vorteilhaft, wenn bei Raumtemperatur von 20°C die Haftkraft pro Flächeneinheit zwischen dem Löseabschnitt und dem zweiten Klebstoff höher ist als zwischen dem zweiten Klebstoff und der zweiten Folienanordnung. Denn dann kann der zweite Klebstoff beim Ablösen des Löseabschnitts an diesem verbleiben und eine Wiederverklebeschicht an diesem bereitstellen.

Da die erste Folienanordnung mit dem Löseabschnitt an einer aus dem hier diskutierten Verpackungsfolienlaminat gebildeten Verpackung in der Regel die Außenseite bilden wird, ist es vorteilhaft, wenn die zweite Folienanordnung, welche die Innenseite einer Verpackung bilden wird, frei von einem Lösebereich ist. Denn dann ist die zweite Folienanordnung auch frei von Materialschwächungen, so dass sie eine ungestörte, intakte Hülle um das zu verpackende Gut bilden kann.

Zur Vermeidung unerwünschter Vermischungen oder/und Überschneidungen von erstem und zweitem Klebstoff in der Adhäsionslage kann vorgesehen sein, dass die Adhäsionslage zwischen erstem und zweitem Klebstoff einen von Klebstoff freien Trennspalt aufweist. Der Trennspalt, welcher erfindungsgemäß der den Löseabschnitt definierenden Materialschwächung folgt bzw. mit deren Verlauf übereinstimmt, ist vorzugsweise etwa 0,3 mm bis 3 mm breit. Dieser Breitenbereich stellt sicher, dass der Löseabschnitt eindeutig von dem Dauerabschnitt abgegrenzt werden kann. Dann, wenn die Materialschwächung eine größere Breite als 0,3 mm aufweist, kann der Trennspalt auch größer als 0,4 mm oder sogar größer als 0,5 mm sein. Ebenso kann der Trennspalt dann, wenn die Materialschwächung deutlich schmäler als 3 mm ist, der Trennspalt schmäler als 2,75 mm oder sogar schmäler als 2,5 mm sein, um zu verhindern, dass sich in einem zwischen erster und zweiter Folienanordnung im Trennspalt gebildeten Zwickel nach einem erstmaligen Herauslösen des Löseabschnitts Staub oder Schmutz und dergleichen ansammelt. Bevorzugt hat der Trennspalt die gleiche Breite wie die Materialschwächung oder weist nicht mehr als deren doppelte Breite auf. Aus Gründen einer einfachen Fertigung weist der Trennspalt über seine Länge vorteilhafterweise im Wesentlichen eine konstante Breite auf.

Die beiden unterschiedlichen Klebstoffe können beispielsweise im Druckverfahren maß- und lagegenau auf die gewünschte Oberfläche der betreffenden Folienanordnung aufgetragen werden, um das hier diskutierte Verpackungsfolienlaminat herzustellen.

Zur Bildung einer möglichst stabilen Verpackung mit einem möglichst stabilen Dauerabschnitt und einem leicht lösbaren und wiederverklebbaren Löseabschnitt ist bevorzugt, wenn der erste Klebstoff ein bei Raumtemperatur von 20°C permanent klebender Klebstoff ist und dass der zweite Klebstoff ein druckempfindlicher Klebstoff (PSA = "pressure sensitive adhesive") ist.

Gemäß einer ersten konstruktiven Variante kann das Verpackungsfolienlaminat als Quasi-Endlosmaterial oder als Bogenmaterial längs einer Längserstreckungsrichtung ausgebildet sein, wobei der Löseabschnitt in Längserstreckungsrichtung ununterbrochen entlang des gesamten Verpackungsfolienlaminats verlaufen kann. Mit dieser konstruktiven Variante können aus dem Verpackungsfolienlaminat Löseabschnitte und damit beispielsweise Klebestreifen mit bezogen auf die daraus gebildete Verpackung größtmöglicher Länge erzielt werden.

Wenn dagegen gewünscht ist, dass eine aus dem hier diskutierten Verpackungsfolienlaminat gebildete Verpackung nicht über eine vollständige Abmessung derselben, etwa über ihre vollständige Länge, mit einem aus dem Verpackungsfolienlaminat herauslösbaren Löseabschnitt versehen ist, etwa um ein in einem Bereich der Verpackung vorgesehenes Druckbild intakt zu belassen, kann auch vorgesehen sein, dass das Verpackungsfolienlaminat als Quasi-Endlosmaterial oder als Bogenmaterial eine Längserstreckungsrichtung aufweist und der Löseabschnitt, unterbrochen von löseabschnittsfreien Bereichen, nur abschnittsweise in Längserstreckungsrichtung des Verpackungsfolienlaminats verläuft.

Grundsätzlich soll der Löseabschnitt in Dickenrichtung des Verpackungsfolienlaminats bündig mit dem ihn umgebenden oder ihm wenigstens benachbarten Dauerabschnitt der ersten Folienanordnung sein. Es handelt sich bei dem Löseabschnitt also nicht um einen zusätzlich auf eine ansonsten intakte Folienanordnung lösbar aufgeklebten Klebestreifen. Dennoch kann der Löseabschnitt, etwa um einem Verbraucher dessen Identifizierung zu erleichtern, hinsichtlich eines auf seiner freien Außenseite sichtbaren Druckbildes von dem ihm benachbarten Dauerabschnitt verschieden sein.

Zusätzlich oder alternativ kann der Löseabschnitt auch wenigstens ein anderes Material als der ihm benachbarte Dauerabschnitt aufweisen, etwa um ihn reißfester als den Dauerabschnitt der ersten Folienanordnung auszugestalten. Denn während der Dauerabschnitt der ersten Folienanordnung dauerhaft durch die zweite Folienanordnung verstärkt ist, ist der Löseabschnitt nach seinem Ablösen von der zweiten Folienanordnung dünner und somit bei gleichem Material wie der Dauerabschnitt mechanisch weniger stark belastbar.

Mit erster und zweiter Folienanordnung ist jeweils wenigstens eine Folie bezeichnet. Die Folienanordnungen können jeweils genau eine oder auch eine Mehrzahl an Folien aufweisen. Beispielsweise kann vorgesehen sein, dass die erste Folienanordnung eine Folie aus einem Polyolefin, insbesondere aus Polypropylen, besonders bevorzugt aus orientiertem Polypropylen, oder aus einem Polyester, insbesondere aus Polyethylenterephthalat, besonders bevorzugt aus orientiertem Polyethylenteraphthalat, oder aus Polyamid, insbesondere aus orientiertem Polyamid umfasst oder eine solche Folie ist und die zweite Folienanordnung eine Folie aus einem Polyolefin, insbesondere aus Polypropylen, besonders bevorzugt aus orientiertem Polypropylen, oder aus einem Polyester, insbesondere aus Polyethylenterephthalat, besonders bevorzugt aus orientiertem Polyethylenteraphthalat, oder aus Polyamid, insbesondere aus orientiertem Polyamid umfasst oder eine solche Folie ist.

Weiterhin kann eine Folienanordnung eine Barrierelage aufweisen, etwa in Form einer Metallisierung oder in Form einer hinzulaminierten Metall-, insbesondere Aluminiumfolie. Dies ist vorzugsweise an der zweiten Folienanordnung vorgesehen, welche nicht notwendigerweise eine Materialschwächung aufweist und welche an einer aus dem vorliegend diskutierten Verpackungsfolienlaminat hergestellten Verpackung bevorzugt innenliegend angeordnet ist, so dass sie für einen Konsumenten ohnehin nicht sichtbar ist, da sie dann von der ersten Folienanordnung verdeckt ist.

Dementsprechend kann die erste Folienanordnung einen Druckauftrag aufweisen. Dieser kann im Schöndruckverfahren oder im Konterdruckverfahren aufgetragen sein.

Die erste Folienanordnung und die zweite Folienanordnung können grundsätzlich vollständig aus verschiedenen Folien gefertigt sein und keine gemeinsame Materialfolie aufweisen. Aus Gründen einer kostengünstigen Fertigung ist jedoch bevorzugt, wenn die erste Folienanordnung und die zweite Folienanordnung je eine Folie aus gleichem Material umfasst oder ist. Ein besonders bevorzugt in beiden Folienanordnungen verwendbares Material kann beispielsweise orientiertes Polypropylen sein.

Die Materialschwächung unterstützt eine definierte Rissausbreitung des Löseabschnitts. Hierzu zählt auch im Sinne der vorliegenden Anmeldung eine der Rissführung dienende Reckung der ersten Folienanordnung, welche an einer fertigen Verpackung im Verbund mit randseitigen Einreißhilfen ebenfalls zu einem definierten Löseabschnitt in der ersten Folienanordnung führt.

Erfindungsgemäß kann die Materialschwächung durch eine Perforation, also durch eine die gesamte Dicke der ersten Folienanordnung durchsetzende Aufhebung des Materialzusammenhangs gebildet sein, welche sich intermittierend, unterbrochen von Bereichen intakten Materialzusammenhangs längs eines vorbestimmten Verlaufs im Verpackungsfolienlaminat, insbesondere in der ersten Folienanordnung, erstreckt.

Erfindungsgemäß kann die Materialschwächung alternativ als eine kontinuierlich verlaufende Durchschneidung der ersten Folienanordnung vorgesehen sein, d. h. der Löseabschnitt ist vom Dauerabschnitt bereits vollständig getrennt und ist lediglich mittelbar über die Adhäsionslage und die zweite Folienanordnung mit dem Dauerabschnitt verbunden. Diese letztgenannte Lösung benötigt bei vorgegebenem zweiten Klebstoff und vorgegebener Gestalt des Löseabschnitts die geringste Lösekraft, da lediglich die Haftkraft des Klebstoffs überwunden werden muss, nicht jedoch vom Konsument auch noch ein Materialzusammenhang zerstört werden muss.

Die Materialschwächung kann Flecke eines diskontinuierlichen Lösebereichs vollständig umschließen, so dass diese vollständig aus dem Verpackungsfolienlaminat herauslösbar und abnehmbar sind. Alternativ kann die Materialschwächung die Flecke nur unvollständig umgeben, so dass diese bestimmungsgemäß unverlierbar mit dem Dauerabschnitt verbunden sind und bleiben, auch wenn sie aus dem Verpackungsfolienlaminat herausgelöst werden.

Die vorliegende Erfindung wird nachfolgend anhand der beiliegenden Zeichnungen näher erläutert. Es stellt dar:
- Figur 1: eine Draufsicht einer erfindungsgemäßen Ausführung eines von einer Rolle abgewickelten, quasi-endlosen Verpackungsfolienlaminats und
- Figur 2: eine Querschnittsansicht durch das Verpackungsfolienlaminat von Figur 1.

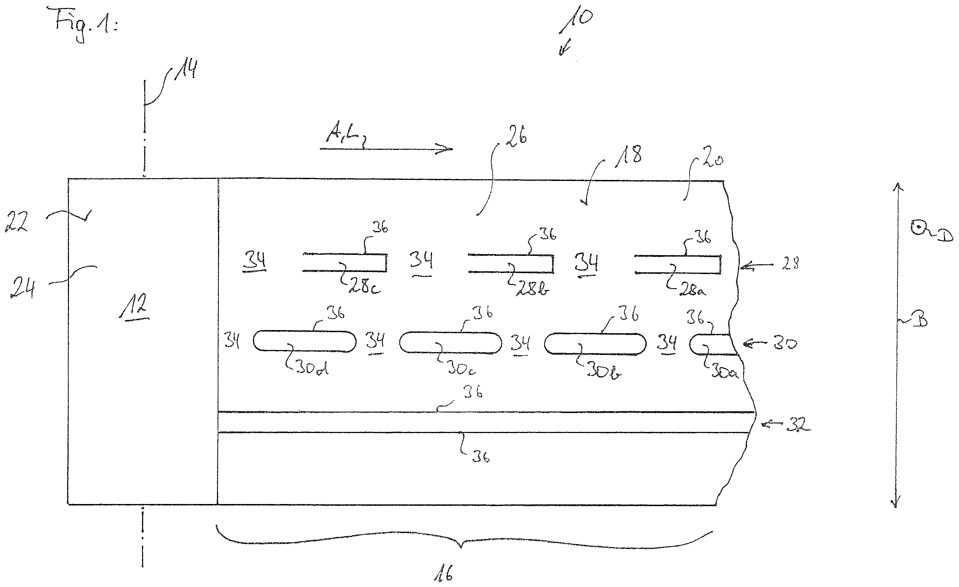

In Figur 1 ist eine erfindungsgemäße Ausführungsform eines Verpackungsfolienlaminats allgemein mit 10 bezeichnet.

Das Verpackungsfolienlaminat 10 kann als quasi-endloses Verpackungsfolienlaminat auf eine Vorratsrolle 12 aufgewickelt sein und durch Drehung der Vorratsrolle 12 um die Rollenachse 14 von dieser längs einer Abrollrichtung A, welche mit einer Längserstreckungsrichtung L des Verpackungsfolienlaminats zusammenfällt, abgerollt werden.

Nach dem Abrollen kann es in an sich bekannter Weise zugeschnitten und zu Verpackungen weiterverarbeitet werden.

Mit einem erfindungsgemäßen Verpackungsfolienlaminat können beliebige Verpackungsformen erzeugt werden, wie etwa Flow Packs, Standbeutel, Stehbodenbeutel, 4-Rand-Beutel mit umlaufend gesiegeltem Rand und dergleichen.

An dem abgerollten Abschnitt 16 in Figur 1 blickt der Betrachter auf eine Außenseite 18 einer ersten Folienanordnung 20, welche die Außenseite einer aus dem Verpackungsfolienlaminat 10 gebildeten Verpackung bilden kann.

An dem auf der Vorratsrolle 12 aufgewickelten Teil des Verpackungsfolienlaminats 10 blickt der Betrachter von Figur 1 auf die der Außenseite 18 der ersten Folienanordnung 20 entgegengesetzten Außenseite 22 einer zweiten Folienanordnung 24. Die Seite 22 der zweiten Folienanordnung 24 kann vorteilhafterweise eine Innenseite einer aus dem Verpackungsfolienlaminat 10 gebildeten Verpackung bilden, denn im Gegensatz zu der ersten Folienanordnung 20 kann die zweite Folienanordnung 24 ohne Materialschwächung und damit ohne strukturelle Beeinträchtigung ihrer mechanischen Festigkeit ausgebildet sein.

Die erste Folienanordnung 20 ist dagegen in einen Dauerabschnitt 26 und in Löseabschnitte 28, 30 und 32 unterteilt.

Zum Zwecke einer erleichterten Illustration sind in Figur 1 an der ersten Folienanordnung drei unterschiedlich gestaltete Löseabschnitte 28, 30 und 32 dargestellt. Normalerweise werden dann, wenn über die Breite B einer Folienbahn mehrere Löseabschnitte vorhanden sind, diese Löseabschnitte im Wesentlichen identisch ausgebildet sein, da aus ein und demselben Verpackungsfolienlaminat in der Regel ein und dieselbe Verpackungsart mit eben nur ein und demselben Löseabschnitt hergestellt werden wird.

Der Löseabschnitt 28 kann in Längsrichtung L des Verpackungslaminats 10 intermittierend ausgebildet sein, d. h. der Löseabschnitt 28 kann durch zum Dauerabschnitt 26 zu zählende löseabschnittsfreie Bereiche 34 unterbrochen sein. Die einzelnen zungenförmigen und daher unverlierbaren Löseabschnittsflecke 28a, 28b und 28c können eine beliebige Gestalt, beispielsweise eine rechteckige Gestalt, aufweisen. Sie sind durch Materialschwächungen 36 gegenüber der restlichen umgebenden ersten Folienanordnung 20, also genauer gegenüber dem Dauerabschnitt 26, abgegrenzt. Die den Löseabschnitt 28 abgrenzende Materialschwächung 36 ist vorteilhaft derart ausgebildet, dass sie ein Herausschälen des Löseabschnitts 28, d. h. der zu ihm gehörenden Löseabschnittsflecke 28a, 28b und 28c aus dem Materialverbund der ersten Folienanordnung 20 erleichtert oder die Materialschwächung kann derart ausgestaltet sein, dass der Materialzusammenhang der ersten Folienanordnung 20 im Bereich der Materialschwächung bereits völlig aufgehoben ist, beispielsweise durch eine kontinuierliche Durchschneidung der ersten Folienanordnung 20 durch ihre gesamte Dicke, wobei in Figur 1 die Dickenrichtung D des Verpackungsfolienlaminats 10 und der beiden Folienanordnungen 20 und 24 orthogonal zur Zeichenebene der Figur 1 verläuft.

Wie die weitere Ausführung eines Löseabschnitts 30 in Figur 1 zeigt, bei dem zu ihm gehörende Löseabschnittsflecken 30a, 30b, 30c und 30d wiederum durch zum Dauerabschnitt 26 zu zählende lösebereichsfreie Abschnitte 34 getrennt sind, kommt es auf das Verhältnis der Länge von Lösungsabschnittsfleck zu löseabschnittsfreiem Unterbrechungsbereich und auf die Gestalt der Lösungsabschnittsflecke nicht an. Die im Gegensatz zu den vorstehend genannten vollständig aus dem Verpackungsfolienlaminat 10 heraustrennbaren Lösungsabschnittsflecke 30a bis 30d des Lösungsabschnitts 30 sind länglich mit jeweils abgerundeten Längsenden dargestellt. Jedoch ist auch diese Gestalt lediglich ein Beispiel. Weiterhin müssen die Lösungsabschnittsflecke oder die Lösungsbereiche keinen geradlinigen Verlauf haben, sondern können beispielsweise einen wellenförmigen oder zickzackförmigen Verlauf aufweisen.

Mit dem Löseabschnitt 32 ist ein über die Längserstreckungsrichtung L kontinuierlicher Löseabschnitt als weitere alternative Ausgestaltungsform eines Löseabschnitts in Figur 1 dargestellt.

Wenngleich eine kontinuierliche Durchschneidung als Form einer Materialschwächung 36 zur Definition des Löseabschnitts und zu dessen Abgrenzung gegenüber dem Dauerabschnitt 26 der ersten Folienanordnung 20 bevorzugt ist, soll nicht ausgeschlossen sein, dass die Durchschneidung in Form einer Perforation intermittierend ist, oder dass anstelle einer in Dickenrichtung durchgehenden Durchschneidung die erste Folienanordnung zur Definition des Löseabschnitts lediglich über einen Teil ihrer Dicke eingeschnitten, eingeritzt, eingeprägt oder sonstwie geschwächt ist.

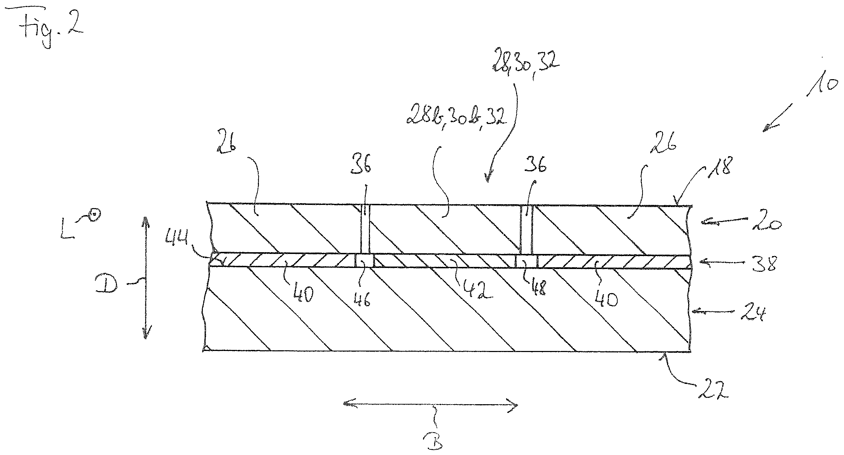

In Figur 2 ist ein beispielhafter Querschnitt durch das Verpackungsfolienlaminat 10 von Figur 10 gezeigt.

Die Schnittebene ist dabei parallel zur Breitenrichtung B und parallel zur Dickenrichtung D der in Figur 1 gezeigten Bahn des Verpackungsfolienlaminats 10.

Dabei spielt es keine Rolle, durch welchen Löseabschnitt 28, 30 oder 32 die Schnittebene hindurchgeht, da das Verpackungsfolienlaminat 10 im Bereich aller Löseabschnitte 28, 30 und 32 von Figur 1 grobschematisch im Wesentlichen die gleiche Struktur aufweist.

Wie in Figur 2 zu erkennen ist, kann die zweite Folienanordnung 24 im Wesentlichen ungeschwächt vorliegen. Die zweite Folienanordnung 24 kann dabei eine Anordnung aus mehreren Folien sein oder kann auch nur eine einzige Folie sein. Im Falle einer einzigen die zweite Folienanordnung 24 bildenden Folie kann diese vorteilhaft aus orientiertem Polypropylen gebildet sein.

Zur vorteilhaften Bildung einer möglichst intakten Hülle um das zu verpackende Gut ist die zweite Folienanordnung vorzugsweise frei von Materialschwächungen.

Die zweite Folienanordnung 24 kann überdies Barrieremaßnahmen umfassen, wie beispielsweise eine Metallfolie oder eine Metallisierung oder aber auch eine Folie aus EVOH und dergleichen.

In der ersten Folienanordnung 20 erkennt man in Figur 2 rechts und links Bereiche des Dauerabschnitts 26. Zwischen diesen durch Materialschwächungen 36 getrennt ist ein Löseabschnitt 28, 30 oder 32 gelegen.

Auch die erste Folienanordnung 20 kann eine Mehrzahl von Folien umfassen oder kann lediglich eine einzige Folie umfassen. Dann, wenn die erste Folienanordnung 20 lediglich eine einzige Folie umfasst, kann auch diese aus orientiertem Polypropylen gebildet sein, wenngleich die Wahl eines anderen Materials nicht ausgeschlossen sein soll.

Weiter kann die erste Folienanordnung 20 einen Druckauftrag umfassen, etwa um Produktinformationen über das mit der später aus dem Verpackungsfolienlaminat 10 gebildeten Verpackung zu verpackende Gut bereitzustellen.

Dabei kann der Löseabschnitt 28, 30 oder/und 32 einen vom Dauerabschnitt 26 verschieden Druckauftrag aufweisen, um dem Verbraucher die Identifizierung des Löseabschnitts 28, 30 oder/und 32 im Vergleich zu dem Dauerabschnitt 26 zu erleichtern.

Die Materialschwächungen 36 können durch feststehende Klingen oder durch Laser oder durch ähnliche Trennwerkzeuge in die erste Folienanordnung 20 eingebracht sein.

Die erste Folienanordnung 20 und die zweite Folienanordnung 24 sind über eine Adhäsionslage 38 miteinander verbunden, welche zwischen den beiden Folienanordnungen 20 und 24 angeordnet ist.

Die Adhäsionslage 38 umfasst wenigstens zwei Klebstoffe, in dem in Figur 2 dargestellten Beispiel sogar genau zwei Klebstoffe, von denen ein erster Klebstoff 40, beispielsweise ein bei einer Raumtemperatur von 20°C permanent klebender Klebstoff, im Bereich des Dauerabschnitts 26 zwischen der ersten Folienanordnung 20 und der zweiten Folienanordnung 24 vorgesehen ist, und von denen ein zweiter Klebstoff 42, etwa ein druckempfindlicher Klebstoff, im Bereich der Löseabschnitte 28, 30 und 32 zwischen der ersten Folienanordnung 20 und der zweiten Folienanordnung 24 vorgesehen ist.

Die Klebstoffe 40 und 42 sind derart gewählt, dass der Klebstoff 40 pro Flächeneinheit eine höhere Haftkraft zwischen der ersten Folienanordnung 20 und der zweiten Folienanordnung 24 bereitstellt als der zweite Klebstoff 42.

Eine zur ersten Folienanordnung 20 hin weisende Oberfläche 44 der zweiten Folienanordnung 24 kann im Bereich des Auftrags des zweiten Klebstoffs 42 mit einer Beschichtung, einer Imprägnierung oder einer Oberflächenbehandlung versehen sein, welche dafür sorgt, dass der zweite Klebstoff 42 stärker an dem Löseabschnitt 28, 30 oder 32 der ersten Folienanordnung 20 als an der zweiten Folienanordnung 24 haftet. Dadurch ist es in vorteilhafter Weise möglich, den Löseabschnitt 28, 30 oder 32 aus der Erstreckungsfläche der ersten Folienanordnung 20 oder auch des Verpackungsfolienlaminats 10 insgesamt herauszulösen, wobei der zweite Klebstoff 42 als Wiederverklebebeschichtung an dem abgelösten Löseabschnitt 28, 30 oder 32 verbleibt.

Gerade durch die Verwendung von druckempfindlichen Klebstoffen als Klebstoff 42, sogenannten PSA (PSA = "Pressure Sensitive Adhesive"), welche üblicherweise gegen beliebige Oberflächen kleben, kann eine Wiederverschließbarkeit einer aus dem Verpackungsfolienlaminat 10 gebildeten Verpackung in einfacher Weise sichergestellt werden, da der aus dem Verpackungsfolienlaminat 10 herausgelöste Löseabschnitt 28, 30 oder 32 mit dem daran anhaftenden Auftrag an Klebstoff 42 an einer beliebigen Stelle, etwa der Außenseite 18 der ersten Folienanordnung 20, erneut mit dieser verklebt werden kann.

Zur erleichterten Trennung der vorzugsweise in einem Druckauftrag aufgetragenen Klebstoffe 40 und 42 kann zwischen den unterschiedlichen Klebstoffen 40 und 42 je ein Trennspalt 46 bzw. 48 vorgesehen sein. Vorzugsweise hat der Trennspalt 46 bzw. 48 den gleichen Verlauf innerhalb der Erstreckungsebene des Verpackungsfolienlaminats 10 wie die ihm zugeordnete Materialschwächung 36. Vorzugsweise ist der Trennspalt 46 bzw. 48 breiter als die ihm zugeordnete Materialschwächung 36, jedoch besonders bevorzugt nicht breiter als das Doppelte der Breite der Materialschwächung 36. Auf diese Weise wird sichergestellt, dass der Lösebereich 28, 30 oder 32 ausreichend gegenüber dem Dauerbereich 26 abgegrenzt ist, ohne dass unnötig Haftkraft im Dauerabschnitt 26 oder/und im Löseabschnitt 28, 30 oder 32 eingebüßt wird.

Im Falle einer Materialschwächung 36 in Form einer Durchschneidung mündet diese Durchschneidung auf der der Adhäsionslage 38 zugewandten Seite der ersten Folienanordnung 20 vorteilhafterweise in den zugeordneten Trennspalt 46 bzw. 48.

## Patentansprüche

1. Verpackungsfolienlaminat (10) zur Bildung von Folienverpackungen, umfassend eine erste Folienanordnung (20) zur Bildung einer Außenseite einer aus dem Verpackungsfolienlaminat (10) gebildeten Folienverpackung, eine zweite Folienanordnung (24) zur Bildung einer Innenseite einer aus dem Verpackungsfolienlaminat (10) gebildeten Folienverpackung und eine zwischen diesen gelegene und zu deren Verbindung miteinander beitragende Adhäsionslage (38), wobei die erste Folienanordnung (20) einen Löseabschnitt (28, 30, 32) aufweist, welcher durch eine Materialschwächung (36) in Form einer kontinuierlich verlaufenden Durchschneidung oder einer Perforation der ersten Folienanordnung (20) definiert ist, wenigstens abschnittsweise an einen Dauerabschnitt (26) derselben Folienanordnung (20) angrenzt und im Gegensatz zum Dauerabschnitt (26) gegen die Haftkraft der Adhäsionslage (38) aus der ursprünglich gemeinsamen Erstreckungsfläche des Verpackungsfolienlaminats (10) und damit aus dem Verpackungsfolienlaminat (10) herauslösbar ist,
wobei die Adhäsionslage (38) wenigstens zwei hinsichtlich ihrer bei Raumtemperatur von 20°C zwischen der ersten (20) und der zweiten Folienanordnung (24) wirkenden Haftkräfte verschiedene Klebstoffe (40, 42) aufweist, von welchen ein erster Klebstoff (40) verglichen mit einem zweiten Klebstoff (42) pro Flächeneinheit eine höhere Haftkraft bereitstellt und im Bereich des Dauerabschnitts (26) aufgetragen ist, und von welchen ein zweiter Klebstoff (42) verglichen mit dem ersten Klebstoff (40) pro Flächeneinheit eine niedrigere Haftkraft bereitstellt und im Bereich des Löseabschnitts (28, 30, 32) vorgesehen ist,
wobei bei Raumtemperatur von 20°C die Haftkraft pro Flächeneinheit zwischen dem Löseabschnitt (28, 30, 32) und dem zweiten Klebstoff (42) höher ist als zwischen dem zweiten Klebstoff (42) und der zweiten Folienanordnung (24),
wobei die Adhäsionslage (38) zwischen erstem (40) und zweitem Klebstoff (42) einen der Materialschwächung (36) folgenden, von Klebstoff (40, 42) freien Trennspalt (46, 48) aufweist.

2. Verpackungsfolienlaminat nach Anspruch 1,
**dadurch gekennzeichnet, dass** im Bereich des Löseabschnitts (28, 30, 32) nur der zweite Klebstoff (42) vorgesehen ist, wobei insbesondere im Bereich des Dauerabschnitts (26) kein zweiter Klebstoff (42) vorgesehen ist.

3. Verpackungsfolienlaminat nach Anspruch 1 oder 2,
**dadurch gekennzeichnet, dass** im Bereich des Dauerabschnitts (26) nur der erste Klebstoff (40) vorgesehen ist.

4. Verpackungsfolienlaminat nach einem der vorhergehenden Ansprüche,
**dadurch gekennzeichnet, dass** die zweite Folienanordnung (24) frei von einem Lösebereich ist.

5. Verpackungsfolienlaminat nach einem der vorhergehenden Ansprüche,
**dadurch gekennzeichnet, dass** der Trennspalt (46, 48) etwa 0,3 mm bis 3 mm, vorzugsweise 0,4 mm bis 2,75 mm, besonders bevorzugt 0,5 mm bis 2,5 mm breit ist.

6. Verpackungsfolienlaminat nach einem der vorhergehenden Ansprüche,
**dadurch gekennzeichnet, dass** der Trennspalt (46, 48) über seine Länge im Wesentlichen eine konstante Breite aufweist.

7. Verpackungsfolienlaminat nach einem der vorhergehenden Ansprüche,
**dadurch gekennzeichnet, dass** der erste Klebstoff (40) ein bei Raumtemperatur von 20°C permanent klebender Klebstoff ist und dass der zweite Klebstoff (42) ein druckempfindlicher Klebstoff (PSA = "pressure sensitive adhesive") ist.

8. Verpackungsfolienlaminat nach einem der vorhergehenden Ansprüche,
**dadurch gekennzeichnet, dass** das Verpackungsfolienlaminat (10) als Quasi-Endlosmaterial oder als Bogenmaterial eine Längserstreckungsrichtung (L) aufweist und der Löseabschnitt (32) in Längserstreckungsrichtung (L) ununterbrochen entlang des gesamten Verpackungsfolienlaminats (10) verläuft.

9. Verpackungsfolienlaminat nach einem der Ansprüche 1 bis 7,
**dadurch gekennzeichnet, dass** das Verpackungsfolienlaminat (10) als Quasi-Endlosmaterial oder als Bogenmaterial eine Längserstreckungsrichtung (L) aufweist und der Löseabschnitt (28, 30), unterbrochen von löseabschnittsfreien Bereichen (34), nur abschnittsweise in Längserstreckungsrichtung (L) des Verpackungsfolienlaminats (10) verläuft.

10. Verpackungsfolienlaminat nach einem der vorhergehenden Ansprüche,
**dadurch gekennzeichnet, dass** der Löseabschnitt (28, 30, 32) hinsichtlich eines auf seiner freien Außenseite sichtbaren Druckbildes oder/und hinsichtlich des Materials von dem ihm benachbarten Dauerabschnitt (26) verschieden ist.

11. Verpackungsfolienlaminat nach einem der vorhergehenden Ansprüche,
**dadurch gekennzeichnet, dass** die erste Folienanordnung (20) eine Folie aus einem Polyolefin, insbesondere aus Polypropylen, besonders bevorzugt aus orientiertem Polypropylen, oder aus einem Polyester, insbesondere aus Polyethylenterephthalat, besonders bevorzugt aus orientiertem Polyethylenteraphthalat, oder aus Polyamid, insbesondere aus orientiertem Polyamid umfasst oder eine solche Folie ist und die zweite Folienanordnung (24) eine Folie aus einem Polyolefin, insbesondere aus Polypropylen, besonders bevorzugt aus orientiertem Polypropylen, oder aus einem Polyester, insbesondere aus Polyethylenterephthalat, besonders bevorzugt aus orientiertem Polyethylenteraphthalat, oder aus Polyamid, insbesondere aus orientiertem Polyamid umfasst oder eine solche Folie ist.

12. Verpackungsfolienlaminat nach einem der vorhergehenden Ansprüche,
**dadurch gekennzeichnet, dass** die erste Folienanordnung (20) und die zweite Folienanordnung (24) je eine Folie aus gleichem Material umfasst oder ist.

13. Verpackungsfolienlaminat nach einem der vorhergehenden Ansprüche,
**dadurch gekennzeichnet, dass** die Materialschwächung (36) zur Bildung des Löseabschnitts (28, 30, 32) eine Perforation oder/und eine Materialdünnstelle, insbesondere kontinuierlich verlaufende Materialdünnstelle, oder/und eine Durchschneidung aufweist.

## Claims

1. A packaging film laminate (10) for constituting film packages, encompassing a first film arrangement (20) for constituting an outer side of a film package constituted from the packaging film laminate (10), a second film arrangement (24) for constituting an inner side of a film package constituted from the packaging film laminate (10), and an adhesion ply (38) placed between them and contributing to joining thereof to one another, the first film arrangement (20) comprising a detachment portion (28, 30, 32) which: is defined by a material attenuation (36) in the form of a continuously proceeding severing cut or a perforation of the first film arrangement (20), at least locally adjoins a permanent portion (26) of the same film arrangement (20) and, unlike the permanent portion (26), is detachable against the adhesion force of the adhesion ply (38) from the originally common extension surface of the packaging film (10) laminate and thus from the packaging film laminate (10),
the adhesion ply (38) comprising at least two adhesives (40, 42) that are different in terms of their adhesion forces that act, at a room temperature of 20°C, between the first (20) and the second film arrangement (24), of which a first adhesive (40) furnishes a greater adhesion force per unit area as compared with a second adhesive (42) and is applied in the region of the permanent portion (26), and of which a second adhesive (42) furnishes a lesser adhesion force per unit area as compared with the first adhesive (40) and is provided in the region of the detachment portion (28, 30, 32),
at a room temperature of 20°C, the adhesion force per unit area between the detachment portion (28, 30, 32) and the second adhesive (42) being greater than between the second adhesive (42) and the second film arrangement (24),
the adhesion ply (38) comprising, between the first (40) and the second adhesive (42), a separating gap (46, 48) that follows the material attenuation (36) and is devoid of adhesive (40, 42).

2. The packaging film laminate according to Claim 1,
**characterized in that** only the second adhesive (42) is provided in the region of the detachment portion (28, 30, 32), in particular no second adhesive (42) being provided in the region of the permanent portion (26).

3. The packaging film laminate according to Claim 1 or 2,
**characterized in that** only the first adhesive (40) is provided in the region of the permanent portion (26).

4. The packaging film laminate according to one of the preceding claims,
**characterized in that** the second film arrangement (24) is devoid of a detachment region.

5. The packaging film laminate according to one of the preceding claims,
**characterized in that** the separating gap (46, 48) is approximately 0.3 mm to 3 mm, preferably 0.4 to 2.75 mm, particularly preferably 0.5 to 2.5 mm wide.

6. The packaging film laminate according to one of the preceding claims,
**characterized in that** the separating gap (46, 48) has substantially a constant width over its length.

7. The packaging film laminate according to one of the preceding claims,
**characterized in that** the first adhesive (40) is an adhesive that adheres permanently at a room temperature of 20°C; and the second adhesive (42) is a pressure-sensitive adhesive (PSA).

8. The packaging film laminate according to one of the preceding claims,
**characterized in that** the packaging film laminate (10), constituting a quasi-endless material or a sheet material, has a longitudinal extension direction (L), and the detachment portion (32) extends in the longitudinal extension direction (L) uninterruptedly along the entire packaging film laminate (10).

9. The packaging film laminate according to one of Claims 1 to 7,
**characterized in that** the packaging film laminate (10), constituting a quasi-endless material or a sheet material, has a longitudinal extension direction (L), and the detachment portion (28, 30) extends only locally, interrupted by detachment portion-free regions (34), in the longitudinal extension direction (L) of the packaging film laminate (10).

10. The packaging film laminate according to one of the preceding claims,
**characterized in that** the detachment portion (28, 30, 32) is different, in terms of a printed image visible on its exposed outer side and/or in terms of material, from the permanent portion (26) adjacent to it.

11. The packaging film laminate according to one of the preceding claims,
**characterized in that** the first film arrangement (20) encompasses a film made of a polyolefin, in particular polypropylene, particularly preferably oriented polypropylene, or of a polyester, in particular polyethylene terephthalate, particularly preferably oriented polyethylene terephthalate, or of polyamide, in particular oriented polyamide, or is such a film; and the second film arrangement (24) encompasses a film made of a polyolefin, in particular polypropylene, particularly preferably oriented polypropylene, or of a polyester, in particular polyethylene terephthalate, particularly preferably oriented polyethylene terephthalate, or of polyamide, in particular oriented polyamide, or is such a film.

12. The packaging film laminate according to one of the preceding claims,
**characterized in that** the first film arrangement (20) and the second film arrangement (24) each encompass or are a film made of the same material.

13. The packaging film laminate according to one of the preceding claims,
**characterized in that** in order to form the detachment portion (28, 30, 32), the material attenuation (36) comprises a perforation and/or a material thinning, in particular a continuously extending material thinning, and/or a severing cut.

## Revendications

1. Un laminé de film d'emballage (10) pour former des emballages sous film, comprenant un premier arrangement de film (20) pour former un côté extérieur d'un emballage sous film formé du laminé de film d'emballage (10), un deuxième arrangement de film (24) pour former un côté intérieur d'un emballage sous film formé du laminé de film d'emballage (10) et une couche d'adhésion (38) située entre les deux et contribuant à leur combinaison, le premier arrangement de film (20) comprenant une section de décollement (28, 30, 32) définie par un affaiblissement de matériau (36) sous forme d'une coupure continue ou d'une perforation du premier arrangement de film (20), au moins partiellement adjacent à une section permanente (26) du même arrangement de film (20) et contrairement à la section permanente (26) décollable de la surface d'extension initialement commune du laminé de film d'emballage (10) et ainsi du laminé de film d'emballage (10) contre la force d'adhésion de la couche d'adhésion (38),
la couche d'adhésion (38) comprenant au moins deux adhésifs (40, 42) différents concernant leurs forces d'adhésion à température ambiante de 20 °C agissant entre le premier (20) et le deuxième arrangement de film (24), dont un premier adhésif (40) possède une plus grande force d'adhésion par unité de surface comparé à un deuxième adhésif (42) et est appliqué dans la région de la section permanente (26) et dont un deuxième adhésif (42) possède une plus petite force d'adhésion par unité de surface comparé au premier adhésif (40) et est appliqué dans la région de la section de décollement (28, 30, 32),
où pour une température ambiante de 20 °C la force d'adhésion par unité de surface entre la section de décollement (28, 30, 32) et le deuxième adhésif (42) est plus grande qu'entre le deuxième adhésif (42) et le deuxième arrangement de film (24), la couche d'adhésion (38) entre le premier (40) et le deuxième adhésif (42) comprenant une fente de séparation (46, 48) dépourvu d'adhésif, le long de l'affaiblissement de matériau (36).

2. Le laminé de film d'emballage selon la revendication 1,
**caractérisé en ce que** dans la région de la section de décollement (28, 30, 32) seulement le deuxième adhésif (42) est prévu, aucun deuxième adhésif (42) n'étant en particulier prévu dans la région de la section permanente (26).

3. Le laminé de film d'emballage selon les revendications 1 ou 2,
**caractérisé en ce que** dans la région de la section permanente (26) seulement le premier adhésif (40) est prévu.

4. Le laminé de film d'emballage selon une des revendications précédentes,
**caractérisé en ce que** le deuxième arrangement de film (24) est dépourvu d'une région de décollement.

5. Le laminé de film d'emballage selon une des revendications précédentes,
**caractérisé en ce que** la fente de séparation (46, 48) a une largeur d'environ 0,3 à 3 mm, de préférence de 0,4 à 2,75 mm, de manière particulièrement préférée de 0,5 à 2,5 mm.

6. Le laminé de film d'emballage selon une des revendications précédentes,
**caractérisé en ce que** la fente de séparation (46, 48) possède sur sa longueur essentiellement une largeur constante.

7. Le laminé de film d'emballage selon une des revendications précédentes,
**caractérisé en ce que** le premier adhésif (40) est un adhésif d'adhésion permanente à une température ambiante de 20 °C et **en ce que** le deuxième adhésif (42) est un adhésif sensible à la pression (PSA = pressure sensitive adhesive).

8. Le laminé de film d'emballage selon une des revendications précédentes,
**caractérisé en ce que** le laminé de film d'emballage (10) comprend en tant que matériau quasiment sans fin ou en tant que matériau en feuille un sens d'extension longitudinal (L) et **en ce que** la section de décollement (32) s'étend dans le sens d'extension longitudinal (L) de manière non-interrompue le long de l'entier laminé de film d'emballage (10).

9. Le laminé de film d'emballage selon une des revendications 1 à 7,
**caractérisé en ce que** le laminé de film d'emballage (10) comprend en tant que matériau quasiment sans fin ou en tant que matériau en feuille un sens d'extension longitudinal (L) et **en ce que** la section de décollement (28, 30) s'étend seulement en partie dans le sens d'extension longitudinal (L) du laminé de film d'emballage (10), interrompue par des régions sans sections de décollement (34).

10. Le laminé de film d'emballage selon une des revendications précédentes,
**caractérisé en ce que** la section de décollement (28, 30, 32) est différente de la section permanente (26) adjacente concernant l'image imprimée sur son côté extérieur libre ou/et concernant le matériau.

11. Le laminé de film d'emballage selon une des revendications précédentes,
**caractérisé en ce que** le premier arrangement de film (20) comprend un film fait d'un polyoléfine, en particulier de polypropylène, de manière particulièrement préférée de polypropylène orienté ou d'un polyester, en particulier de polyéthylène téréphtalate, de manière particulièrement préférée de polyéthylène téréphtalate orienté ou de polyamide, en particulier de polyamide orienté, ou est un tel film et **en ce que** le deuxième arrangement de film (24) comprend un film fait d'un polyoléfine, en particulier de polypropylène, de manière particulièrement préférée de polypropylène orienté ou d'un polyester, en particulier de polyéthylène téréphtalate, de manière particulièrement préférée de polyéthylène téréphtalate orienté ou de polyamide, en particulier de polyamide orienté ou est un tel film.

12. Le laminé de film d'emballage selon une des revendications précédentes,
**caractérisé en ce que** le premier arrangement de film (20) et le deuxième arrangement de film (24) comprennent ou sont chacun un film d'un même matériau.

13. Le laminé de film d'emballage selon une des revendications précédentes,
**caractérisé en ce que** l'affaiblissement de matériau (36) comprend une perforation ou/et une région d'amincissement de matériau, en particulier une région d'amincissement de matériau continue ou/et une coupure pour former la section de décollement (28, 30, 32).
